# EUROPEAN PATENT APPLICATION

(11) **EP 4 621 310 A1**
(43) Date of publication of application: **24.09.2025**
(21) Application number: 23890937.8
(22) Date of filing: 14.11.2023
(51) Int. Cl.: F24S 25/12, H02S 20/10

(54) **STRUCTURE FOR SUPPORTING PHOTOVOLTAIC SOLAR PANELS AND ASSEMBLY METHOD**

(30) Priority: 17.11.2022 ES 202230998
(71) Applicant: AEROPUERTOS OBRA CIVIL, S.A., 28050 Madrid (ES)
(72) Inventor: APARICIO GARCIA, Jorge, 28050 Madrid (ES)
(74) Representative: Espiell Gomez, Ignacio
(86) International application number: PCT/ES2023/070679
(87) International publication number: WO 2024/105295

(57) **Abstract**

The present invention relates to the definition of a tensile funicular structure for arranging tables of photovoltaic solar panels and to a method for assembling or installing same.

## Description

### TECHNICAL FIELD

The present invention relates to the definition of a tensile funicular structure for arranging tables of photovoltaic solar panels and to a method for assembling or installing same.

The metal structures supporting photovoltaic panels have the following challenges that minimise their initial cost and energy production capacity and which the present invention improves:
- Reducing the number of foundation supports saves costs and allows for a better adaptation to terrain with steep slopes.
- Reducing foundation supports and sagging of the support structure profiles in the plane of the tables minimises albedo shadows that prevent the bifacial use of the plates.
- Resolving the warp-proof capacity due to the effect of the wind
- Reducing the number of screws to be installed in the structure saves installation labour
- Increasing the degree of industrialisation

The present invention involves describing a type of support for photovoltaic solar panels using a tensile funicular structure.

By threading tensioners at the ends of the successive structural frames of the solar panels, the panels can be hung, without creating shadows that harm electrical production.

The arrangement of tensioners in the plane of the plates also allows the structure to be stabilised against the wind in second order deformations due to the actions of the wind.

The threading method allows for streamlined implementation, minimises the use of screws and steel, increases industrialisation and minimises labour

### STATE OF THE ART

The development of support solutions for fixed and mobile photovoltaic solar panels with a metal structure is in continuous evolution.

The typology of metal structure tables supporting fixed plates can be single shaft, such as parking canopies, or bi-shaft or tri-shaft such as conventional solar garden tables, depending on the number of rammed supports per gantry.

The type of followers is also multiple and varied, basically consisting of cantilevered metal beams anchored to a central tube that allows the orientation of the planes of the metal structure plates using torsion.

In both cases, if structural shadows on the underside of bifacial photovoltaic solar panels are avoided, energy production can be maximised.

The market is full of examples, but not like the one being disclosed in this invention

### BRIEF DESCRIPTION OF THE INVENTION

The invention is a tight structure based on threading the metal frames of the photovoltaic solar panels with tendons that are anchored at the ends.

The following problems are solved by this invention:
- The structure avoids shadows to take advantage of the albedo on the lower side of the plates, avoiding interruptions in production
- The production of bifacial photovoltaic panels is maximised
- The structure minimises supports allowing maximum use in parking canopies
- Minimising the supports allows maximum adaptability to non-horizontal terrain
- The weight of steel used for the support structure is minimised
- Labour is saved in assembly.

### BRIEF DESCRIPTION OF THE FIGURES

The invention is better understood with the aid of the graphic description given by way of example and illustrated by the figures in which each one represents that which is indicated:
Figure 1 Overview of a practical application
Figure 2 Plan view of a table of photovoltaic solar panels
Figure 3 Detail view of plate threading through the tensioners
Figure 4 Detail view of packaging and installation.

### DETAILED DESCRIPTION OF AN EXEMPLARY EMBODIMENT

The present invention will now be described more fully with reference to the accompanying drawings in which the assembly is shown. This invention can, however, be carried out in many different ways and should not be construed as being limited to the forms mentioned herein, but rather, the invention is provided so that this thorough and complete description fully conveys the scope of the invention to the person skilled in the art.

The represented figures configure the self-explanatory description:

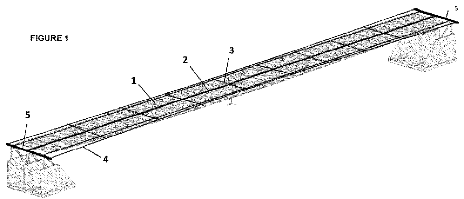

Figure 1 General perspective of a practical application indicating the photovoltaic solar panels (1), the suspension tendons (or tensioners) (2), the diversion tendons (or tensioners) (3), the stabilisation tendons (or tensioners) against the wind (4) as well as an exemplary anchor beam (5) of the tensioners

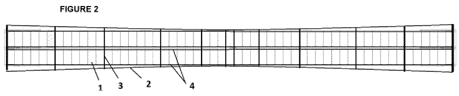

Figure 2 Plan view of a table of photovoltaic solar panels showing the photovoltaic solar panels (1), the suspension tendons (or tensioners) (2), the diversion tendons (or tensioners) (3), the stabilisation tendons (or tensioners) against the wind (4) as well as an exemplary anchor beam (5) of the tensioners that may be fixed or mobile.

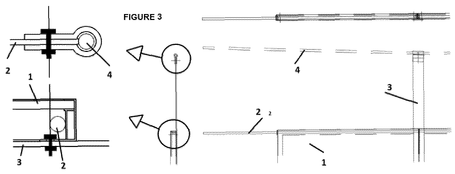

Figure 3 Detail view of the threading of the plate structure (1) through the suspension tensioners (or tendons) (2), placement of the diversion tensioners (or tendons) (3) and the latching of the stabilisation tensioners (or tendons) against the wind (4)

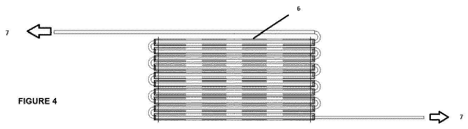

Figure 4 Detail view of the packaging (6) and the installation method (7) of each row of panels between two suspension tendons owing to the threading using guide cords or suspension tendons in the factory that, by way of a folded blanket, allows for swift installation when unfolding the package of plates and tensioning the hanging cables from the anchors as if it were a clothesline for photovoltaic solar panels.

After the unpacking, the tensioning of the suspension tendons and the anchoring thereof, the diversion tensioners and the wind stabilisation tensioners, also anchored at their ends, are placed.

## Claims

1. A support structure for photovoltaic solar panels **characterised in that** it comprises:
• Photovoltaic solar panels or plates (1)
• Suspension tensioners or tendons (2) threaded into edges of the metal structure of photovoltaic panels or plates; metal or fibre-reinforced polymer tensioners of any type, bare or sheathed; anchored at the ends
• Diversion tensioners or tendons (3) integrally connected with the plates; metal or fibre-reinforced polymer tensioners of any type, bare or sheathed, anchored to wind stabilisation tensioners or tendons (4)
• Wind stabilisation tensioners or tendons (4) integrally connected with the plates; metal or fibre-reinforced polymer tensioners of any type, bare or sheathed; anchored at the ends
• Any heavy-duty end anchors (5)

2. A packaging method of photovoltaic panels in rows to minimise assembly and screwing labour
• Horizontal packing of the panels alternately upwards and downwards in an accordion shape
• Threading of panels by separate guide threads (6) which may be the same tendons or suspension tensioners, with S-shaped threading to be able to present the panels in position.

3. A method of installation **characterised in that** it comprises:
• Provisional anchoring of a pair of thread ends, and stretching in the opposite direction to anchor areas on both sides (7).
